# EUROPÄISCHE PATENTSCHRIFT

(11) **EP 1 485 268 B1**
(45) Veröffentlichungstag und Bekanntmachung des Hinweises auf die Patenterteilung: **19.09.2007**
(21) Anmeldenummer: 02776760.7
(22) Anmeldetag: 01.10.2002
(51) Int. Cl.: B60W 30/16

(54) **GESCHWINDIGKEITSREGLER MIT STOP & GO FUNKTION**
CRUISE CONTROL SYSTEM HAVING A STOP & GO FUNCTION
REGULATEUR DE VITESSE PRESENTANT UNE FONCTION ARRET-DEMARRAGE

(30) Priorität: 09.03.2002 DE 10210547
(43) Veröffentlichungstag der Anmeldung: 15.12.2004
(73) Patentinhaber: ROBERT BOSCH GMBH, 70442 Stuttgart (DE)
(72) Erfinder: UHLER, Werner, 76646 Bruchsal (DE); WEILKES, Michael, 74343 Sachsenheim (DE); WINNER, Hermann, 76467 Bietigheim (DE); MICHI, Harald, 75248 Oelbronn-Duerrn (DE)
(86) Internationale Anmeldenummer: PCT/DE2002/003713
(87) Internationale Veröffentlichungsnummer: WO 2003/076226

(56) Entgegenhaltungen:
- WO-A-00/62139
- DE-A- 19 821 163

## Beschreibung

Die Erfindung betrifft einen Geschwindigkeitsregler für Kraftfahrzeuge, mit einer Sensoreinrichtung zur Messung von Betriebsparametern des Fahrzeugs und zur Messung des Abstands zu einem vor dem Fahrzeug befindlichen Objekt und mit einer Steuereinrichtung zur Steuerung der Geschwindigkeit oder Beschleunigung des Fahrzeugs in Abhängigkeit von den gemessenen Betriebsparametern und Abstandsdaten.

### Stand der Technik

Solche Geschwindigkeitsregler ermöglichen es, die Geschwindigkeit des Fahrzeugs auf eine vom Fahrer gewählte Wunschgeschwindigkeit zu regeln. Da die Sensoreinrichtung auch einen Abstandssensor aufweist, beispielsweise in der Form eines Radarsensors, eines Stereo-Kamerasystems oder dergleichen, kann die Fahrzeuggeschwindigkeit auch so geregelt werden, daß automatisch ein geeigneter Sicherheitsabstand zu einem vorausfahrenden Fahrzeug eingehalten wird. Ein Beispiel eines solchen Regelsystems, das auch als ACC-System (Active Cruise Control) bekannt ist, wird beschrieben in "Adaptive Cruise Control System - Aspects and Development Trends" von Winner, Witte, Uhler und Lichtenberg, Robert Bosch GmbH, in SAE Technical Paper Series 961010, International Congress & Exposition, Detroit, 26.-29. Februar 1996.

Aus der WO00/62139, die den Oberbegriff des Anspruchs 1 definiert, ist ein System zur automatischen Folgeführung, insbesondere zur automatischen Staufolgeführung, eines Kraftfahrzeugs bekannt, um so den Fahrer in Stausituationen sowohl durch die Übernahme der Querführung mittels einer automatischen Lenkungsregelung als auch durch Einhalten einer bestimmten Distanz zu einem Führungsfahrzeug zu entlasten. Die zuletzt genannte Funktion benötigt eine adaptive Fahr-und Bremsregelung mit Stop&Go-Funktion. Erfindungsgemäß sind Auswahl- und Entscheidungsmittel vorgesehen, die eine Auswahl von Regelparametern als auch von Reglertypen treffen, z. B. Folgeführung des Kraftfahrzeugs nach mittels einer Videokamera erkannten Fahrbahnmarkierungen oder nach einem erkannten Führungsfahrzeug. Das System ist in Hierarchiestufen I-IV gegliedert, wobei sich der Fahrer stets in dem der obersten Hierarchiestufe IV zugeordneten Überwachungs- und Adaptionskreis befindet, so dass er die höchste Priorität hat und das System jederzeit übersteuern kann.

Aus der DE 198 21 163 A1 ist ein Fahrerassistenzsystem und ein Verfahren zu dessen Betrieb bekannt, wobei die Erfassungsmittel für vorbestimmte, momentane Umgebungsparameter eine Verkehrswegeart, wie beispielsweise Autobahn, Landstraße und/oder Stadtstraße, eine Verkehrsart, wie beispielsweise Autobahnverkehr, Landstraßenverkehr, Stadtverkehr, Stop&Go-Verkehr und/oder Stau, eine Durchschnittsgeschwindigkeit, ein Kurvenradius eines momentan befahrenen Verkehrsweges, eine momentan befahrene Fahrspur etc. erkannt.

Da jedoch mit den verfügbaren Sensoreinrichtungen eine vollständige Erfassung und sichere Bewertung des Verkehrsumfeldes noch nicht möglich ist, eignen sich diese Systeme bisher vor allem für relativ stabile Verkehrssituationen wie z.B. das Fahren auf einer Autobahn oder Schnellstraße. Im innerstädtischen Verkehr oder bei Fahrten mit niedriger Geschwindigkeit auf kurvenreichen Strecken könnten dagegen die Unsicherheiten bei der Erfassung des jeweils relevanten Zielobjektes zu einem Unfallrisiko führen. Aus diesem Grund sind bekannte ACC-Systeme bisher so ausgelegt, daß sie sich nur oberhalb einer bestimmten Grenzgeschwindigkeit aktivieren lassen.

Es ist jedoch vorschlagen worden, den Anwendungsbereich des ACC-Systems auf eine Verkehrssituation zu erweitern, die als Stop & Go Verkehr bezeichnet wird und die beispielsweise bei einem Verkehrsstau oder bei zähfüssigern Verkehr auftritt. Auch diese Verkehrssituation ist relativ stabil und eignet sich daher für eine automatische Abstandsregelung. Allerdings muß die Funktionalität so erweitert werden, daß auch Anfahr- und Anhaltevorgänge automatisch gesteuert bzw. geregelt werden können.

Außerdem sollte der Anwendungsbereich dieser Stop and Go Funktion auf Geschwindigkeiten unterhalb eines bestimmten Wertes begrenzt werden, wobei sich die Geschwindigkeitsbereiche für die ACC-Funktion und Stop & Go Funktion überlappen können.

Auch bei niedriger Geschwindigkeit kann jedoch unter Umständen ein Unfallrisiko auftreten, falls der Fahrer sich in einer ungeeigneten Situation auf die automatische Funktion des Geschwindigkeitsreglers verläßt, insbesondere, wenn er die Stop & Go Funktion mißbräuchlich auch im innerstädtischen Verkehr beim Abbiegen oder in Wohngebieten einsetzt.

### Aufgabe, Lösung und Vorteile der Erfindung

Aufgabe der Erfindung ist es, einen Geschwindigkeitsregler zu schaffen, der einen erweiterten, das Erfordernis der Verkehrssicherheit berücksichtigenden Anwendungsbereich aufweist.

Diese Aufgabe wird durch die Merkmale des Anspruchs 1 gelöst.

Durch die Erfindung wird somit der Anwendungsbereich der Stop & Go Funktion zwangsweise auf Verkehrssituationen beschränkt, in denen diese Funktion gefahrlos benutzt werden kann.

Vorteilhafte Ausgestaltungen der Erfindung ergeben sich aus den Unteransprüchen.

Eine typische Situation, in der der Fahrer an einer Nutzung der Stop & Go Funktion gehindert werden sollte, ist zum Beispiel das Abbiegen an einer innerstädtischen Kreuzung. Bei dem Abbiegevorgang geht zwangsläufig das bisher verfolgte Zielobjekt, also das bisher vorausfahrende Fahrzeug, aus dem Ortungsbereich der Umfeldsensorik verloren, so daß der Geschwindigkeitsregler mit einer Erhöhung der Fahrgeschwindigkeit reagieren würde. Dabei bestünde die Gefahr, daß Hindernisse wie Fußgänger oder stehende oder fahrende Fahrzeuge in der Straße, in die das Fahrzeug einbiegt, nicht rechtzeitig erkannt werden. Aus diesem Grund besteht gemäß einer bevorzugten Ausführungform der Erfindung eine der Bedingungen, die das Abschalten der Stop & Go Funktion auslösen, darin, daß ein Abbiegevorgang erkannt wird.

Ein Kriterium für die Erkennung eines Abbiegevorgangs kann zum Beispiel darin bestehen, daß der Kurvenradius einer von dem Fahrzeug durchfahrenen Kurve kleiner als ein vorbestimmter Wert ist. Verfahren zur Messung des Kurvenradius sind als solche bekannt. Zum Beispiel kann mit Hilfe eines Gierratensensors die Gierrate des Fahrzeugs oder mit Hilfe eines Beschleunigungsensors die Querbeschleunigung des Fahrzeugs gemessen werden und dann der Kurvenradius aus der gemessenen Fahrzeuggeschwindigkeit und Gierrate oder Querbeschleunigung berechnet werden. Wahlweise oder zusätzlich kann auch der Lenkeinschlag ausgewertet werden. Da ein Abbiegewunsch häufig durch Setzen des Blinkers angezeigt wird, ist es zur Steigerung der Erkennungsgenauigkeit auch möglich, das Blinksignal auszuwerten, indem beispielsweise der Schwellenwert für den Kurvenradius geändert wird.

Auch bei Fahrten in Wohngebieten sollte die Stop & Go Funktion inaktiviert werden. Zwar liegt die in Wohngebieten zulässige Geschwindigkeit (30 km/h) in dem Bereich, in dem normalerweise auch die Stop & Go Funktion eingesetzt werden kann, doch ist hier häufig mit unvorhergesehenen Ereignissen, etwa mit spielenden den Kindern zu rechnen, so daß der Fahrer das Verkehrsgeschehen mit erhöhter Aufmerksamkeit verfolgen und sich nicht auf die Funktion des Geschwindigkeitsreglers verlassen sollte. Von dem regulären Anwendungsfall der Stop & Go Funktion unterscheidet sich diese Situation in der Regel dadurch, daß kein Zielobjekt in der Form eines dicht vorausfahrenden Fahrzeugs vorhanden ist. Der Geschwindigkeitsregler wird deshalb das Fahrzeug beschleunigen, bis die vom Fahrer eingestellte Wunschgeschwindigkeit oder die obere Grenzgeschwindigkeit für die Stop & Go Funktion erreicht ist. Ein Kriterium zur Erkennung dieser Situation besteht deshalb darin, daß das Fahrzeug für eine gewisse Zeit mit der Grenzgeschwindigkeit bzw. der Wunschgeschwindigkeit fährt, ohne daß ein Zielobjekt erfaßt wird. Ein alternatives Kriterium besteht darin, daß das bisherige Zielobjekt verloren geht und innerhalb einer bestimmten Zeitspanne kein neues Zielobjekt geortet wird. Bei dieser Variante kann die Abschaltung bereits erfolgen, bevor das Fahrzeug die Grenzgeschwindigkeit bzw. Wunschgeschwindigkeit erreicht hat.

Die Prozedur zur Abschaltung der Stop & Go Funktion kann gemäß einer bevorzugten Ausführungsform der Erfindung darin bestehen oder damit beginnen, daß der Fahrer beispielsweise durch ein akustisches Signal dazu aufgefordert wird, selbst die Kontrolle zu übernehmen oder, soweit die Voraussetzungen gegeben sind, auf die ACC-Funktion umzuschalten. Der Fahrer kann diese Aufforderung bestätigen, indem er z. B. einen Schalter, das Gaspedal oder die Bremse betätigt. Diese Betätigung löst dann automatisch die Abschaltung der Stop & Go Funktion und gegebenenfalls den Übergang zur ACC Funktion aus.

Falls der Fahrer innerhalb einer bestimmten Wartezeit nicht auf die Aufforderung reagiert, kann die Abschaltung zwangsweise vorgenommen werden, etwa in der Form, daß die Fahrzeuggeschwindigkeit auf einen sehr niedrigen Wert heruntergeregelt wird. Hierdurch wird zum einen dem Fahrer angezeigt, daß die Bedingungen für die Stop & Go Funktion nicht gegeben sind, und zum anderen wird durch die niedrige Geschwindigkeit die Gefährdung anderer Verkehrsteilnehmer auf ein Minimum reduziert.

Wahlweise kann die Zwangsabschaltung auch durch eine Abbremsung in den Stillstand erfolgen.

### Zeichnung

Im folgenden wird ein Ausführungsbeispiel der Erfindung an der Zeichnung erläutert.

Es zeigen:
- Figur 1: ein Blockdiagramm des Geschwindigkeitsreglers und zugehöriger Bedienungs- und Anzeigeelemente;
- Figur 2: ein Diagramm zur Erläuterung von Geschwindigkeitsbereichen, in denen verschiedene Funktionen des Geschwindigkeitsreglers anwendbar sind; und
- Figur 3: ein Flußdiagramm eines Programms, das in dem erfindungsgemäßen Geschwindigkeitsregler implementiert ist.

### Beschreibung von Ausführungsbeispielen

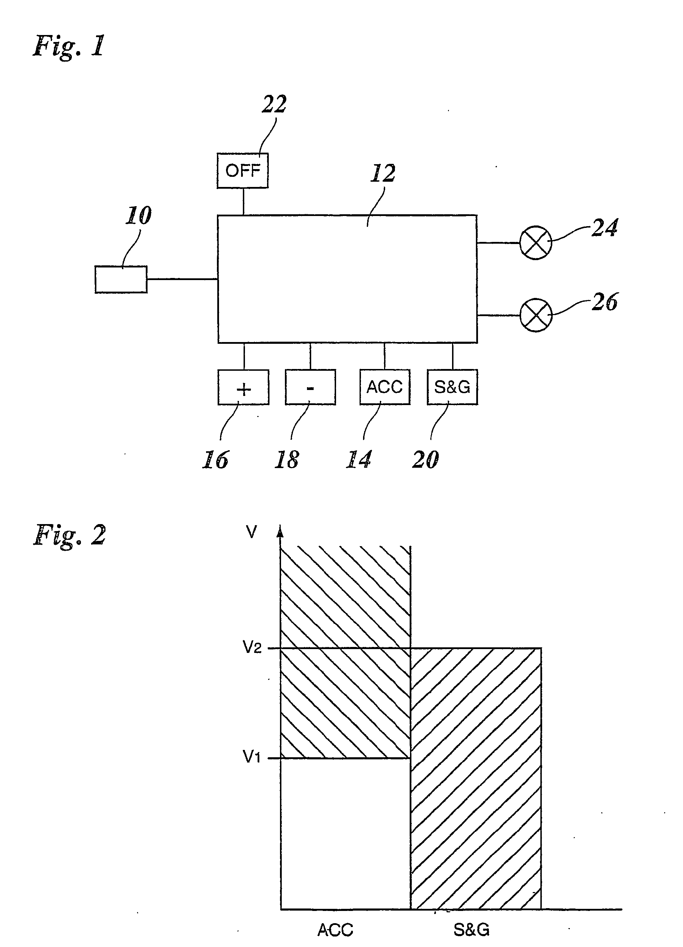

Da der Aufbau und die Wirkungsweise eines Geschwindigkeitsreglers mit ACC-Funktion bekannt sind, zeigt Figur 1 lediglich die wichtigsten Komponenten in einem Blockdiagramm. Eine Sensoreinrichtung 10 umfaßt mindestens einen Abstandssensor, beispielsweise einen Radarsensor, der den Abstand und die Relativgeschwindigkeit eines vorausfahrenden Fahrzeugs mißt. Sofern von dem Radarsensor mehrere Objekte erfaßt werden, beispielsweise mehrere Fahrzeuge oder auch Standziele wie Straßenschilder und dergleichen, wird u. a. durch Plausibilitätsauswertung ein Zielobjekt ausgewählt.

Zu der Sensoreinrichtung 10 gehören außerdem noch bekannte Sensoren, beispielsweise ein Fahrgeschwindigkeitssensor, Beschleunigungssensoren zur Erfassung der Längsbeschleunigung und der Querbeschleunigung, ein Giergeschwindigkeitssensor und dergleichen, die ohnehin in Fahrzeug vorhanden sind und deren Signale auch für andere Regelungszwecke genutzt werden. Die Signale der Abstandssensorik und der übrigen Sensoren werden in einer elektronischen Steuereinrichtung 12 ausgewertet, die beispielsweise durch einen Mikrocomputer gebildet wird. Die Steuereinrichtung 12 wirkt auf das Antriebs- und Bremssystem des Fahrzeugs ein, um die Fahrgeschwindigkeit entweder auf eine vom Fahrer gewählte Wunschgeschwindigkeit oder auf einen geeigneten Abstand zum vorausfahrenden Fahrzeug zu regeln.

Diese Regelfunktion, im folgenden als ACC-Funktion bezeichnet, wird vom Fahrer durch Betätigen einer ACC-Taste 14 aktiviert. Wenn bereits früher eine Wunschgeschwindigkeit gespeichert war, hat das Betätigen der ACC-Taste die Funktion, daß die Regelung auf diese Wunschgeschwindigkeit wieder aufgenommen wird ("resume"). Andernfalls wird die Wunschgeschwindigkeit gesetzt, indem der Fahrer kurzzeitig eine Taste 16 betätigt, nachdem das Fahrzeug die gewünschte Geschwindigkeit erreicht hat. Weitere oder anhaltende Betätigung der Taste 16 bewirkt eine schrittweise Erhöhung der Wunschgeschwindigkeit. Entsprechend bewirkt die Betätigung einer Taste 18 eine schrittweise Absenkung der Wunschgeschwindigkeit.

Die ACC-Funktion schaltet sich selbsttätig aus, sobald die Geschwindigkeit des Fahrzeugs einen bestimmten Wert V₁ von beispielsweise 40 km/h unterschreitet. Sobald die Geschwindigkeit unterhalb eines größeren Wertes V₂ liegt, der beispielsweise 50 km/h beträgt, kann der Fahrer jedoch durch Betätigen einer Taste 20 eine Stop & Go Funktion aktivieren. Von dieser Möglichkeit wird der Fahrer beispielsweise dann Gebrauch machen, wenn er auf ein Stauende auffährt. Die Stop & Go Funktion bewirkt dann, daß das Fahrzeug automatisch in einem passenden Abstand vor dem Stauende zum Stillstand gebracht wird. Wenn das vor dem eigenen Fahrzeug haltende Fahrzeug ein Stück vor fährt, bewirkt die Stop & Go Funktion, daß das eigene Fahrzeug automatisch anfährt und seinerseits ein entsprechendes Stück vor fährt. Die Geschwindigkeit des eigenen Fahrzeugs wird dabei automatisch auf die Geschwindigkeit V₂ oder eine kleinere, vom Fahrer mit Hilfe der Tasten 16 und 18 gewählte Wunschgeschwindigkeit begrenzt. Es soll hier jedoch angenommen werden, daß die Wunschgeschwindigkeit nicht kleiner als V₂ gewählt werden kann.

Mit einer Taste 22 kann der Geschwindigkeitsregler deaktiviert werden, unabhängig davon, ob gerade die Stop & Go Funktion oder die ACC-Funktion aktiv ist.

Figur 2 illustriert die Geschwindigkeitsbereiche, in denen die ACC-Funktion und die Stop & Go Funktion aktivierbar sind. In dem Geschwindigkeitsbereich zwischen V₁ und V₂ sind beide Funktion aktivierbar, doch schließen sich die beiden Funktionen gegenseitig aus.

Das Aufleuchten einer Lampe 24 (Figur 1) zeigt an, daß die ACC-Funktion aktiv ist. Diese Lampe 24 weist einen Zwischenzustand zwischen dem eingeschalteten und dem ausgeschalteten Zustand auf. Dieser Zwischenzustand wird beispielsweise dadurch gebildet, daß die Lampe schwächer aufleuchtet, einen Farbumschlag zeigt oder daß lediglich eine Umrahmung der Lampe aufleuchtet, und zeigt an, daß die ACC-Funktion aktivierbar aber nicht aktiv ist. Entsprechend zeigt ein Aufleuchten oder ein Zwischenzustand einer Lampe 26 an, daß die Stop & Go Funktion aktiv bzw. aktivierbar ist.

Durch Betätigen des Gaspedals kann der Fahrer sowohl die ACC-Funktion als auch die Stop & Go Funktion übersteuern, um vorübergehend auf eine höhere Geschwindigkeit zu beschleunigen. Die Betätigung des Bremspedals hat dagegen ebenso wie die Betätigung der Taste 22 die Funktion, den Geschwindigkeitsregler zu deaktivieren.

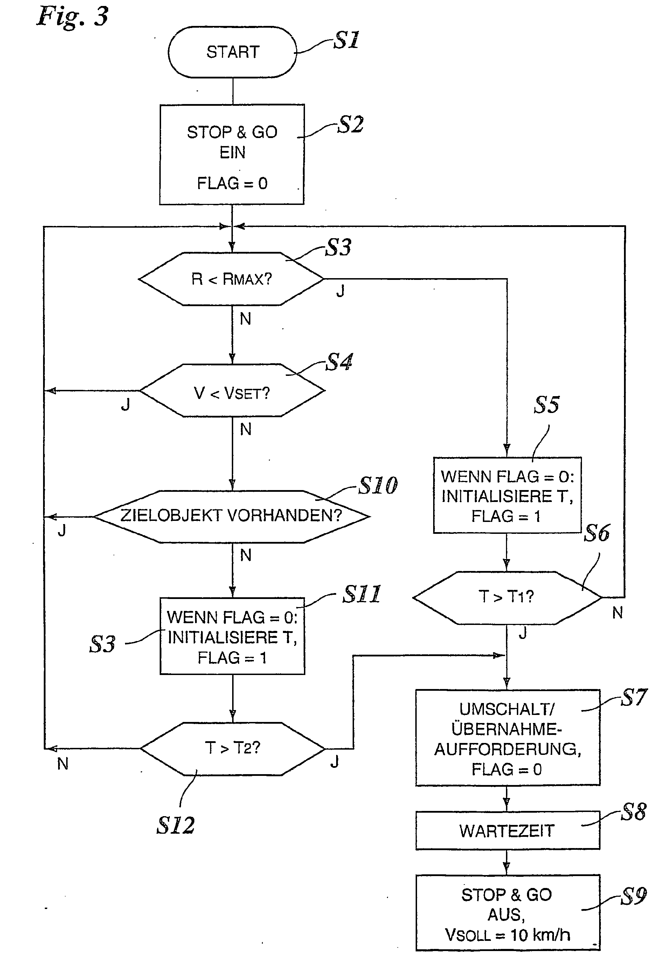

Figur 3 zeigt ein Flußdiagramm eines Programms, das von der Steuereinrichtung 12 ständig im Hintergrund ausgeführt wird, solange die Stop & Go Funktion aktiv ist. Dieses Programm wird aufgerufen (Schritt S1) sobald die Taste 20 betätigt wird.

In Schritt S2 wird die Stop & Go Funktion aktiviert. Die Programmteile, die im Rahmen dieser Funktion das automatische Anfahren, Rollen und Anhalten des Fahrzeugs in Abhängigkeit von dem gemessenen Abstand zum Zielobjekt steuern, sind hier nicht dargestellt.

Außerdem wird in Schritt S2 ein Flag auf Null gesetzt.

In Schritt S3 wird, beispielsweise anhand der Fahrzeuggeschwindigkeit und der gemessenen Querbeschleunigung des Fahrzeugs, der Kurvenradius R der in diesem Augenblick von dem Fahrzeug durchfahrenen Kurve berechnet und mit einem Schwellenwert R_{MAX} verglichen. Wenn R größer ist als R_{MAX}. so bedeutet dies, daß das Fahrzeug im wesentlichen geradeaus fährt, das heißt, daß kein Abbiegevorgang vorliegt.

In diesem Fall wird in Schritt S4 überprüft, ob die augenblickliche Geschwindigkeit V des Fahrzeugs kleiner als die vom Fahrer eingestellte Wunschgeschwindigkeit V_{SET} (oder V₂) ist. Wenn auch diese Bedingung erfüllt ist, so deutet dies darauf hin, daß die Geschwindigkeit des Fahrzeugs durch ein erfaßtes Zielobjekt begrenzt wird, das heißt, daß tatsächlich eine Situation vorliegt, die durch Stop & Go oder zäh fließenden Verkehr gekennzeichnet ist, also eine Situation, in der die Stop & Go Funktion benutzt werden kann.

Unter diesen Bedingungen erfolgt ein Sprung zu Schritt S3, und die Überprüfungen in den Schritten S3 und S4 werden fortlaufend wiederholt.

Wenn sich in Schritt S3 zeigt, daß der augenblickliche Kurvenradius R kleiner ist als R_{MAX}, so erfolgt eine Verzweigung zu Schritt S5. In Schritt S5 wird ein Zeitgeber T gestartet und ein Flag auf "1" gesetzt, um anzuzeigen, daß der Zeitgeber läuft. Falls der Zeitgeber bereits in einem vorausgegangenen Zyklus gestartet worden ist, was durch einen von Null verschiedenen Wert des Flags angezeigt wird, so findet in Schritt S5 keine Aktion statt.

In Schritt S6 wird dann überprüft, ob der Wert des Zeitgebers T größer ist als eine vorgegebene Wartezeit T₁. Wenn dies nicht der Fall ist, erfolgt ein Rücksprung zu Schritt S3.

Wenn der Kurvenradius R während eines Zeitintervalls der Länge T1 ständig kleiner als R_{MAX} geblieben ist, so wird geschlossen, daß ein Abbiegevorgang vorliegt. In diesem Fall wird der Fahrer in Schritt S7 aufgefordert, selbst die Kontrolle über das Fahrzeug zu übernehmen. Außerdem wird das Flag auf Null zurückgesetzt.

Die Übernahmeaufforderung an den Fahrer erfolgt vorzugsweise durch ein akustisches Signal. Wahlweise oder ergänzend kann die Aufforderung auch durch das Aufleuchten einer Signallampe angezeigt werden. Der Fahrer kann nun selbst die Kontrolle übernehmen, indem er mit Hilfe der Taste 22 die Stop & Go Funktion ausschaltet oder indem er das Gaspedal betätigt. Wenn in Schritt S7 die Übernahmeaufforderung ergangen ist, so hat die Betätigung des Gaspedals, anders als im regulären Stop & Go Betrieb, nicht die Funktion, daß die automatische Regelung übersteuert wird, sondern vielmehr die Funktion; daß die Stop & Go Funktion ausgeschaltet wird. Wie üblich hat auch die Betätigung des Bremspedals zur Folge das, daß die Stop & Go Funktion ausschaltet wird.

Die Stop & Go Funktion wäre, falls die Geschwindigkeit kleiner als V₂ geblieben ist, sofort wieder aktivierbar. Um dies zu verhindern, kann das System wahlweise so ausgelegt seien, daß die Stop & Go Funktion erst nach einer bestimmten Wartezeit wieder aktivierbar ist. Das Erlöschen der Lampe 26 zeigt an, daß die Stop & Go Funktion nicht aktiv und auch nicht aktivierbar ist.

Wenn der Fahrer innerhalb einer bestimmten Wartezeit (Schritt S8) nicht auf die Übernahmeaufforderung reagiert, so erfolgt in Schritt S9 eine Selbstabschaltung der Stop & Go Funktion, und die Geschwindigkeit des Fahrzeugs wird automatisch auf eine sehr niedrige, sichere Geschwindigkeit, beispielsweise auf 10 km/h, herunter geregelt. Wahlweise kann das Fahrzeug auch zum Stillstand abgebremst werden. Durch diese Maßnahme wird dem Fahrer verdeutlicht, daß er die Stop & Go Funktion unter diesen Bedingungen nicht benutzen kann, und er wird dazu angehalten, auf die Übernahmeaufforderung zu reagieren.

Falls in Schritt S4 festgestellt wird, daß die Geschwindigkeit V des Fahrzeugs die Wunschgeschwindigkeit V_{SET} erreicht hat, so wird in Schritt S 10 weiter überprüft, ob im Ortungsbereich des Radarsensors noch ein Zielobjekt vorhanden ist.

Der Ortungsbereich des Radarsensors, insbesondere die Ortungstiefe, kann in Abhängigkeit davon variieren, ob die Stop & Go Funktion oder die ACC Funktion aktiv ist. Im allgemeinen ist es zweckmäßig, für die ACC-Funktion eine größere Ortungstiefe zu wählen als im Stop & Go Betrieb. Die Überprüfung in Schritt S10 bezieht sich auf dem Ortungsbereich, der für die Stop & Go Funktion gültig ist.

Wenn die Überprüfung ergibt, daß noch ein Zielobjekt vorhanden ist, so liegt eine Situation vor, die auch im regulären Stop & Go Betrieb auftreten kann, und es erfolgt ein Rücksprung zu Schritt S3. Wenn dagegen kein Zielobjekt mehr erfaßt wird, so deutet dies darauf hin, daß kein Stop & Go Betrieb vorliegt und daß der Fahrer die Stop & Go Funktion mißbräuchlich benutzt. In diesem Fall wird in Schritt S11 der Zeitgeber T gestartet und das Flag gesetzt, sofern es nicht schon früher gesetzt war.

In Schritt S12 wird überprüft, ob der Wert des Zeitgebers T größer ist als eine zweite vorgegebene Wartezeit T₂ ist. Die Wartezeit T₂ wird im allgemeinen größer sein als die Wartezeit T₁ in Schritt S6. Falls die Wartezeit T₂ noch nicht abgelaufen ist, erfolgt ein Rücksprung zu Schritt S3. Wenn dann innerhalb dieser Wartezeit erneut ein Zielobjekt erfaßt wird, so wird die Stop & Go Funktion normal fortgesetzt. Wenn dagegen die Wartezeit T₂ abläuft, ohne daß erneut ein Zielobjekt erfaßt wird, so bestätigt dies den Verdacht, daß eine mißbräuchliche Nutzung der Stop & Go Funktion vorliegt, und es erfolgt eine Verzweigung zu dem bereits beschriebenen Schritt S7.

In einer abgewandelten Ausführungsform wird der Schritt S4 ausgelassen oder durch eine Überprüfung ersetzt, ob die aktuelle Geschwindigkeit kleiner als V₂ ist. Das Mißbrauchskriterium besteht dann allein darin, daß während der Zeitdauer T₂ kein Zielobjekt vorhanden ist.

Falls unter diesen Bedingungen die Geschwindigkeit V des Fahrzeugs annähernd gleich V₂ und somit größer als V₁ ist, hat der Fahrer in diesem Fall auch die Möglichkeit, durch Betätigen der Taste 14 auf die ACC-Funktion umzuschalten. Dies wird durch den Zwischenzustand der Lampe 24 angezeigt. Wenn innerhalb der in Schritt S8 bestimmten Wartezeit weder eine Umschaltung auf die ACC-Funktion noch eine Übernahme der Kontrolle durch den Fahrer erfolgt, so wird die Stop & Go Funktion wieder mit Schritt S9 beendet.

Durch die oben beschriebenen Maßnahmen wird somit sichergestellt, daß die Stop & Go Funktion nur in Verkehrssituationen benutzt werden kann, in denen dies nicht zu einer Gefährdung der Fahrzeuginsassen oder anderer Verkehrsteilnehmer führt. Die Kriterien für die Zulässigkeit der Stop & Go Funktion können im Rahmen der Erfindung auf vielfältige Weise modifiziert und ergänzt werden. Beispielsweise ist es möglich, die Schritte S5 und S6 fortzulassen, so daß ein Abbiegevorgang sofort erkannt wird, sobald der Kurvenradius kleiner als ein geeigneter Schwellenwert ist.

## Patentansprüche

1. Geschwindigkeitsregler für Kraftfahrzeuge, mit einer Sensoreinrichtung (10) zur Messung von Betriebsparametern des Fahrzeugs und zur Messung des Abstands zu einem vor dem Fahrzeug befindlichen Objekt und mit einer Steuereinrichtung (12) zur Steuerung der Geschwindigkeit oder Beschleunigung des Fahrzeugs in Abhängigkeit von den gemessenen Betriebsparametern und Abstandsdaten, wobei die Steuereinrichtung (12) eine Stop&Go-Funktion zur automatischen Steuerung von Anfahr-, Roll- und Anhaltevorgängen in Abhängigkeit von Bewegungen des Objektes **aufweist dadurch gekennzeichnet, dass** die Sensoreinrichtung (10) während des Stop&Go-Betriebs fortlaufend prüft ob ein Abbiegevorgang vorliegt, indem die Sensoreinrichtung (10) den momentanen Kurvenradius (R) ermittelt und einen Abbiegevorgang erkennt, wenn der ermittelte Kurvenradius (R) kleiner als ein vorgegebener Schwellenwert (R_{MAX}) ist, der einem sicheren Stop&Go-Betrieb widerspricht, und bei Vorliegen einer solchen Bedingung eine Prozedur zur Abschaltung der Stop&Go-Funktion einleitet.

2. Geschwindigkeitsregler nach Anspruch 1, **dadurch gekennzeichnet, daß** der Abbiegevorgang erkannt wird, wenn der von der Sensoreinrichtung (10) gemessene Kurvenradius (R) während eines vorgegebene Zeitintervalls (T₁) ständig kleiner als ein vorgegebener Schwellenwert (R_{MAX}) ist.

3. Geschwindigkeitsregler nach einem der vorstehenden Ansprüche, **dadurch gekennzeichnet, daß** eine der überprüften Bedingungen darin besteht, daß die von der Sensoreinrichtung (10) gemessene augenblickliche Geschwindigkeit (V) des Fahrzeugs während eines vorgegebenen Zeitintervalls (T₂) im wesentlichen gleich einer für die Stop&Go-Funktion gültigen Wunschgeschwindigkeit (V_{SET}) ist und während dieses Zeitintervalls kein Zielobjekt erfaßt wird.

4. Geschwindigkeitsregler nach einem der Ansprüche 1 oder 2, **dadurch gekennzeichnet, daß** eine der überprüften Bedingungen darin besteht, daß die von der Sensoreinrichtung (10) gemessene augenblickliche Geschwindigkeit (V) des Fahrzeugs während eines vorgegebenen Zeitintervalls (T₂) kleiner als eine für die Stop&Go-Funktion zugelassene Grenzgeschwindigkeit (V₂) ist und während dieses Zeitintervalls kein Zielobjekt erfaßt wird.

5. Geschwindigkeitsregler nach einem der vorstehenden Ansprüche, **dadurch gekennzeichnet, daß** die Prozedur zur Abschaltung der Stop&Go-Funktion die Ausgabe einer Aufforderung an den Fahrer beinhaltet, die Kontrolle über das Fahrzeug zu übernehmen oder, sofern die Bedingungen dafür erfüllt sind, auf einem regulären Geschwindigkeits- und Abstandsregelmodus (ACC) umzuschalten.

6. Geschwindigkeitsregler nach Anspruch 5, **dadurch gekennzeichnet, daß** die Aufforderung in einem akustischen Signal besteht

7. Geschwindigkeitsregler nach einem der vorstehenden Ansprüche, **dadurch gekennzeichnet, daß** die Prozedur zur Abschaltung der Stop&Go-Funktion das automatische Herunterregeln der Fahrzeuggeschwindigkeit auf Null oder einen niedrigen Geschwindigkeitswert beinhaltet.

8. Geschwindigkeitsregler nach Anspruch 5 oder 6 und nach Anspruch 7, **dadurch gekennzeichnet, daß** das automatische Herunterregeln nach Ablauf einer bestimmten Wartezeit nach Ausgabe der Aufforderung erfolgt

## Claims

1. Cruise controller for motor vehicles, having a sensor device (10) for measuring operating parameters of the vehicle and for measuring the distance from an object which is located in front of the vehicle and having a control device (12) for controlling the speed or accelerating the vehicle as a function of the measured operating parameters and distance data, wherein the control device (12) has a stop & go function for automatically controlling starting processes, rolling processes and stopping processes as a function of movements of the object, **characterized in that**, during the stop & go operating mode, the sensor device (10) continuously tests whether a turning-off manoeuvre is occurring by virtue of the fact that the sensor device (10) determines the instantaneous bend radius (R) and detects a turning-off manoeuvre if the determined bend radius (R) is smaller than a predefined threshold value (R_{MAX}) which contradicts a safe stop & go operating mode, and if such a condition is present initiates a procedure for switching off the stop & go function.

2. Cruise controller according to Claim 1, **characterized in that** the turning-off manoeuvre is detected if the bend radius (R) measured by the sensor device (10) is continuously smaller during a predefined time interval (T₁) than a predefined threshold value (R_{MAx}).

3. Cruise controller according to one of the preceding claims, **characterized in that** one of the checked conditions consists in the fact that, during a predefined time interval (T₂), the instantaneous speed (V) of the vehicle which is measured by the sensor device (10) is essentially the same as a desired speed (V_{SET}) which is valid for the stop & go function and no target object is sensed during this time interval.

4. Cruise controller according to one of Claims 1 or 2, **characterized in that** one of the checked conditions consists in the fact that, during a predefined time interval (T₂), the instantaneous speed (V) of the vehicle which is measured by the sensor device (10) is lower than a limiting speed (V₂) which is permitted for the stop & go function and no target object is sensed during this time interval.

5. Cruise controller according to one of the preceding claims, **characterized in that** the procedure for switching off the stop & go function includes the outputting of a request to the driver to assume control of the vehicle or, if the conditions for it are met, to switch over to a normal speed and inter-vehicle distance control mode (ACC).

6. Cruise controller according to Claim 5, **characterized in that** the request is in the form of an acoustic signal.

7. Cruise controller according to one of the preceding claims, **characterized in that** the procedure for switching off the stop & go function includes automatically reducing the speed of the vehicle to zero or to a low speed value.

8. Cruise controller according to Claim 5 or 6 and according to Claim 7, **characterized in that** the automatic reduction takes place after a specific waiting time after the request has been output has expired.

## Revendications

1. °) Régulateur de vitesse de véhicule automobile comportant une installation de capteur (10) pour mesurer les paramètres de fonctionnement du véhicule et pour mesurer la distance d'un objet situé devant le véhicule ainsi qu'une installation de commande (12) pour commander la vitesse ou l'accélération du véhicule en fonction des paramètres de fonctionnement mesurés et des données de distances,
l'installation de commande (12) ayant une fonction marche-arrêt pour commander automatiquement les opérations de démarrage, de roulage et d'arrêt en fonction des mouvements de l'objet,
**caractérisé en ce que**
l'installation de capteur (10) vérifie en continu pendant le fonctionnement marche-arrêt s'il y a une manoeuvre de changement de direction et l'installation de capteur (10) détermine ainsi le rayon de courbure instantané (R) et reconnaît une manoeuvre de changement de direction si le rayon de courbure (R) obtenu est inférieur à un seuil prédéfini (R_{MAX}) qui s'oppose à un fonctionnement marche-arrêt en sécurité et si cette condition existe, il lance une procédure pour couper la fonction de marche-arrêt.

2. °) Régulateur de vitesse selon la revendication 1,
**caractérisé en ce qu'**
on reconnaît une manoeuvre de changement de direction si le rayon de courbure (R) mesuré par l'installation de capteur (10) pendant un intervalle de temps prédéfini (T₁) est toujours inférieur à un seuil prédéfini (R_{MAX}) .

3. °) Régulateur de vitesse selon l'une des revendications précédentes,
**caractérisé en ce que**
l'une des conditions à contrôler est que la vitesse instantanée (V) du véhicule, mesurée par l'installation de capteur (10), dans un intervalle de temps (T₂) prédéfini, est pour l'essentiel égale à une vitesse souhaitée (V_{SET}) valable pour la fonction marche-arrêt et si dans cet intervalle aucun objet cible n'est détecté.

4. °) Régulateur de vitesse selon l'une des revendications 1 ou 2,
**caractérisé en ce que**
l'une des conditions à contrôler est que la vitesse instantanée (V) du véhicule, mesurée par l'installation de capteur (10), pendant un intervalle de temps prédéfini (T₂), est inférieure à une vitesse limite (V₂) autorisée pour la fonction marche-arrêt et si pendant cet intervalle de temps aucun objet cible n'est saisi.

5. °) Régulateur de vitesse selon l'une des revendications précédentes,
**caractérisé en ce que**
la procédure de coupure de la fonction marche-arrêt contient l'émission d'une requête destinée au conducteur de reprendre le contrôle du véhicule ou dans la mesure où les conditions sont remplies, de commuter sur un mode régulier de régulation de vitesse et de distance (ACC).

6. °) Régulateur de vitesse selon la revendication 5,
**caractérisé en ce que**
la requête est un signal acoustique.

7. °) Régulateur de vitesse selon l'une des revendications précédentes,
**caractérisé en ce que**
la procédure de coupure de la fonction marche-arrêt contient la réduction régulée automatique de la vitesse du véhicule jusqu'à zéro ou à un niveau de vitesse plus faible.

8. °) Régulateur de vitesse selon les revendications 5 ou 6 et selon la revendication 7,
**caractérisé en ce que**
la réduction automatique par régulation se fait après un certain temps d'attente suivant l'émission de la requête.
